# EUROPEAN PATENT SPECIFICATION

(11) **EP 2 770 787 B1**
(45) Date of publication and mention of the grant of the patent: **06.06.2018**
(21) Application number: 14156243.9
(22) Date of filing: 21.02.2014
(51) Int. Cl.: H04W 60/00, H04W 4/00, H04W 12/06, H04W 84/00

(54) **Passenger mobile station registration with a passenger communications system using near field communications**
Registrierung der Mobilstation eines Passagiers mit einem Passagierkommunikationssystem mit Nahfeldkommunikation
Enregistrement de station mobile de passagers avec un système de communications de passagers utilisant des communications en champ proche

(30) Priority: 21.02.2013 US 201313773079
(43) Date of publication of application: 27.08.2014
(73) Proprietor: The Boeing Company, Chicago, IL 60606-1596 (US)
(72) Inventor: Ayotte, Loren T., Chicago, IL Illinois 60606-2016 (US)
(74) Representative: Boult Wade Tennant

(56) References cited:
- EP-A1- 2 541 978
- EP-A1- 2 542 000
- WO-A1-2011/007338
- WO-A2-2008/045205
- US-A1- 2008 181 169
- US-A1- 2011 314 507
- US-A1- 2012 042 363

## Description

### FIELD

Aspects of the present disclosure relate to passenger communications on board a vehicle, such as an aircraft, and more particularly to a system, method and computer program product for passenger mobile station registration with a passenger communications system using near field communications (NFC).

### BACKGROUND

The use of mobile stations including mobile communications devices, such as cellular phones, smart phones, lap top computers, pad computing devices and the like, at virtually anywhere the user may be, is becoming more and more common place. This includes use of such devices on different modes of transportation or vehicles including passenger aircraft. However, current aircraft communications systems, which are similar to terrestrial cellular telephone systems and may be referred to as picocells, usually require the passenger to enter a secure personal identification number (PIN) or other security code to register with the aircraft communications system (see, for example, EP2542000 A1) The PIN or security code is typically provided to the passenger before boarding the aircraft, such as at check-in and must the remembered by the passenger. Additionally, current aircraft systems obtain passenger names by cross-referencing the mobile number of the mobile station that is being registered by the aircraft communications system to a ground cellular network. Cross-referencing the passenger's mobile number requires a data connection from the aircraft to the ground cellular network which requires an expense to be incurred by the air carrier. Additionally, there currently is no limit to the number of mobile stations or devices that one passenger may register. Accordingly, a passenger may register a cellular phone or smart phone, lap top computer, gaming device or other combination or wireless communications devices.

Current onboard vehicle or aircraft communications systems also do not provide a mechanism to offer service priority to select passengers. For example, it may be desired to give first class seats higher priority to access the communications system than economy classes. Current systems also cannot determine if a mobile station that is trying to register is from a valid or occupied seat location. A higher level of security is needed where a mobile station has to correspond to a valid or occupied seat. Further, current systems cannot provide service priority to aircraft crew except by manually entering the mobile number into the system. Accordingly, a method, system and computer program product that overcomes these disadvantages to onboard passenger communications systems is needed.

United states patent application publication number US 2011/0314507 A1 describes a personal electronic device that may be registered with an in-flight entertainment system in order to act as a remote control for the in-flight entertainment system or display video received from the in-flight entertainment system.

### BRIEF SUMMARY

The present invention relates to a method, a passenger communication system and a computer program product as claimed in independent claims 1, 7 and 13. According to one aspect of the present disclosure, a method for registering a mobile station of a passenger may include receiving a message from a near field communications (NFC) module of the mobile station by an NFC terminal of a passenger communications system on a vehicle. The message may include information for registering the mobile station with the passenger communications system. The method may also include registering the mobile station with the passenger communications system based on the message.

According to another aspect of the present disclosure, a passenger communications system on board a vehicle may include a processor and at least one near field communications (NFC) terminal for receiving a message from an NFC module of a mobile station of a passenger. The message may include information for registering the mobile station with the passenger communications system. The system may also include a communications link between the at least one NFC terminal and the processor. The system may further include a module operating on the processor for registering the mobile station with the passenger communications system based on the message.

According to a further aspect of the present disclosure, a computer program product for registering a mobile station of a passenger may include a computer readable storage medium having computer readable program code embodied therewith. The computer readable program code may include computer readable program code which when executed by a processor, configures the processor to receive a message from a near field communications (NFC) module of the mobile station by an NFC terminal of a passenger communications system. The message may include information for registering the mobile station with the passenger communications system. The computer readable program code may also include computer readable program code which when executed by a processor, configures the processor to register the mobile station with the passenger communications system based on the message.

According to an aspect of the disclosure a method for registering a mobile station of a passenger is provided. The method comprises receiving a message from a near field communications (NFC) module of the mobile station by an NFC terminal of a passenger communications system, the message comprising information for registering the mobile station with the passenger communications system; and registering the mobile station with the passenger communications system based on the message.

Receiving the message by the NFC terminal may comprise receiving information about the mobile station for registering the mobile station with the passenger communications system and wherein the NFC terminal is uniquely associated with a particular passenger seat.

The NFC terminal may be located for initializing an NFC transmission with the mobile station in response to the mobile station contacting or being located within a predetermined proximity to the NFC terminal or a designated feature at the passenger's seat.

The information about the mobile station may comprise information other than at least one of a personal identification number (PIN) and a security code for authorizing use of the passenger communications system.

The method may further comprises validating the message by an NFC based validation module on a server of the passenger communications system.

Receiving the message by the NFC terminal may comprise receiving at least a portion of a name of the passenger and seat information of the passenger for registering the mobile station with the vehicle communication system and wherein the NFC terminal is associated with a plurality of passenger seats.

The method may further comprise validating at least the portion of the name of the passenger and seat information of the passenger by an NFC validation module on a server of the passenger communications system.

The NFC validation module may validate passenger input data and establishes an ability to register the mobile station with the passenger communications system.

The method may further comprise determining a class of service based on registering the mobile station.

Determining the class of service based on registering the mobile station may comprise providing at least one NFC terminal in each different portion of the vehicle based on the class of service in each different portion.

The method may further comprise providing a plurality of NFC terminals, the NFC terminals being distributed in known locations about the vehicle, an NFC terminal location being determined and used during mobile station registration.

According to another aspect of the invention, a passenger communications system on board a vehicle is provided. The passenger communications system comprises at least one near field communications (NFC) terminal for receiving a message from an NFC module of a mobile station of a passenger, the message comprising information for registering the mobile station with the passenger communications system; a processor; a communications link between the at least one NFC terminal and the processor; and a module operating on the processor for registering the mobile station with the passenger communications system based on the message.

The system may further comprise a plurality of NFC terminals, each NFC terminal being uniquely associated with a particular passenger seat and the message received by the NFC terminal comprising information about the mobile station for registering the mobile station with the passenger communications system.

Each respective NFC terminal may be located for initializing an NFC transmission with a mobile station in response to contacting the mobile station of each passenger to a designated feature at the passenger's seat or the mobile station being located within a predetermined proximity of the respective NFC terminal or designated feature.

The information about the mobile station may comprise information other than at least one of a personal identification number (PIN) and a security code for authorizing use of the passenger communications system.

The system may further comprise an NFC based validation module on a server of the passenger communications system for validating the message.

The vehicle may be an aircraft, the system further comprising a plurality of NFC terminals, one NFC terminal being located at each passenger seat.

The system may further comprise a plurality of NFC terminals, each NFC terminal being associated with a plurality of passenger seats and the message received by the NFC terminal comprising at least a portion of a name of the passenger and seat information of the passenger for registering the mobile station with the passenger communications system.

In another aspect of the invention, a computer program product for registering a mobile station of a passenger is provided. The computer program product comprises a computer readable storage medium having computer readable program code embodied therewith, the computer readable program code comprising: computer readable program code which when executed by a processor, configures the processor to: receive a message from a near field communications (NFC) module of the mobile station by an NFC terminal of a passenger communications system, the message comprising information for registering the mobile station with the passenger communications system; and register the mobile station with the passenger communications system based on the message.

### BRIEF DESCRIPTION OF THE SEVERAL VIEWS OF THE DRAWINGS

The present disclosure is further described in the detailed description which follows in reference to the noted plurality of drawings by way of nonlimiting examples of embodiments of the present disclosure in which like reference numerals represent similar parts throughout the several views of the drawings and wherein:
Figures 1A -1C (collectively Figure 1) are a flow chart of an example of a method for registering a mobile station of a passenger with a passenger communications system in accordance with an embodiment of the present disclosure.
Figure 2 is a block schematic diagram of an example of a passenger communications system including a system for registering passenger mobile stations in accordance with an embodiment of the present disclosure.
Figure 3 is an example of different locations where a designated feature and/or an NFC terminal may be located in association with each passenger's seat in accordance with an embodiment of the present disclosure.
Figure 4 is an example of a layout of NFC terminals where an NFC terminal may be associated with a plurality of seats in accordance with an embodiment of the present disclosure.
Figure 5 is an example of a screen or graphical user interface (GUI) presentable on a control panel or interface providing registration information for each passenger in accordance with an embodiment of the present disclosure.
Figure 6 is an example of another screen or GUI that may be presented on a control panel or interface to manually register a mobile station with a passenger communications system in accordance with an embodiment of the present disclosure.

### DETAILED DESCRIPTION

As will be appreciated by one skilled in the art, aspects of the present disclosure may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that may contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing. Computer program code for carrying out operations for aspects of the present disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the present disclosure are described below with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified in the flowchart and/or block diagram block or blocks.

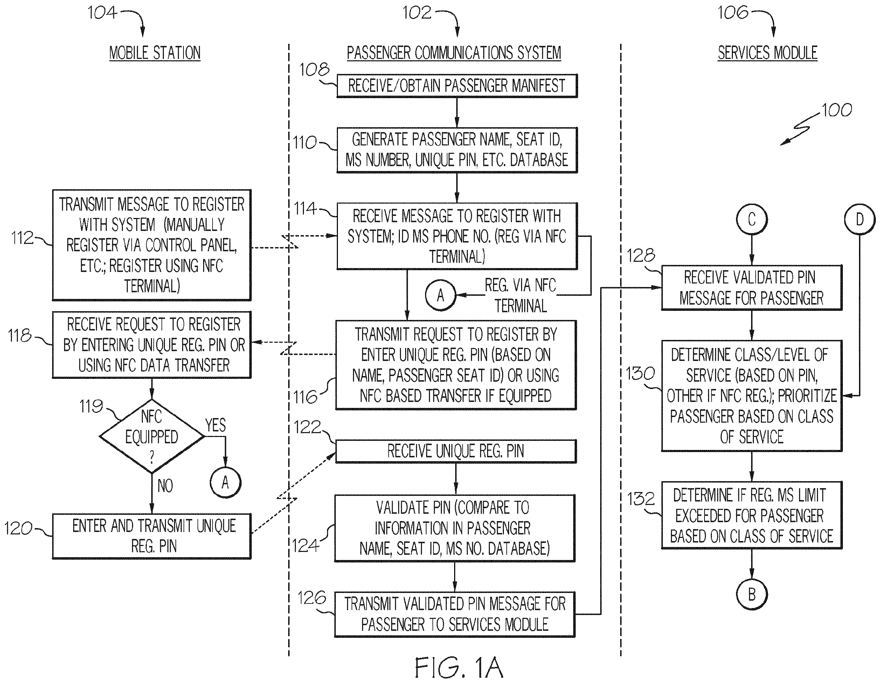

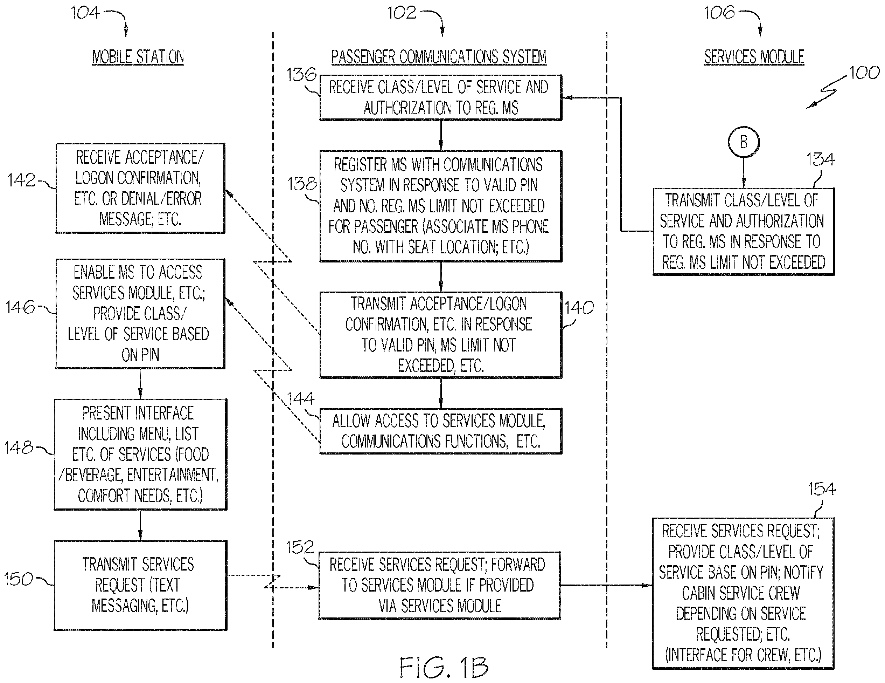

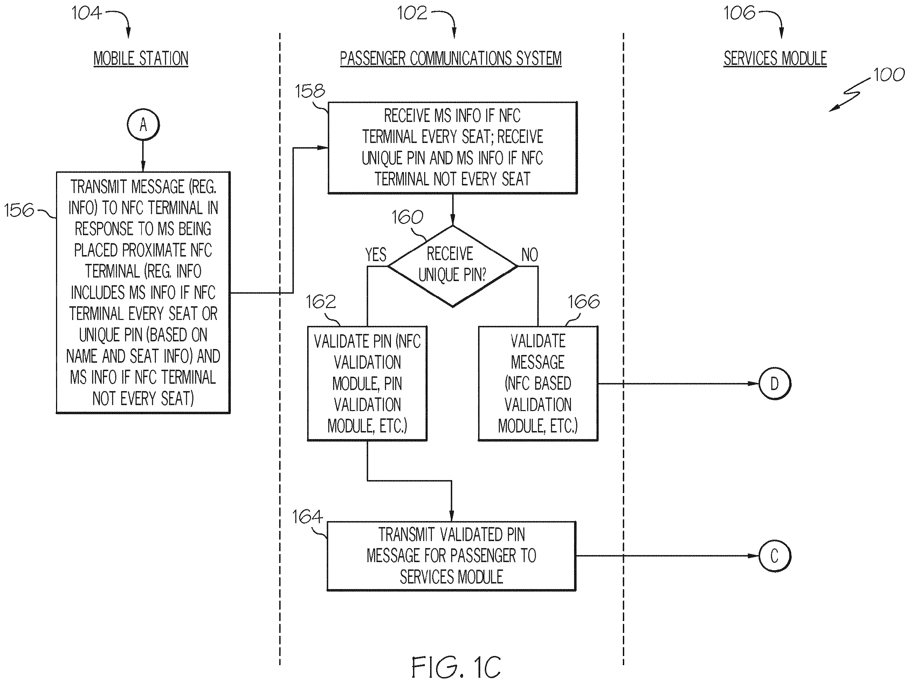

Figures 1A-1C (collectively Figure 1) are a flow chart of an example of a method 100 for registering a mobile station of a passenger with a vehicle passenger communications system 102 on a vehicle in accordance with an embodiment of the present disclosure. The flow chart is divided into different portions corresponding to operations or functions that may be performed by a mobile station 104, the passenger communications system 102 and a services module 106 operating on a processor of a server or other computer system on the vehicle. The flow chart illustrates how the passenger communications system 102, the mobile station 104 and the services module 106 may interface and communicate with one another to provide the user or passenger services and functions described below. As described herein, the passenger communications system 102 may be or may include a picocell or small cellular base station onboard an aircraft or other vehicle, such as a ship, terrestrial vehicle or other mode of transportation. The vehicle communication system 102 may also include a processor or server for performing the functions or operations described herein. The systems and methods described may also have applications in other facilities or environments other than vehicles.

The mobile station 104 may be a cellular phone, smart phone, laptop computer or other mobile communications device capable of performing the functions described herein.

In block 108, a passenger manifest may be received or obtained. The passenger manifest may include passenger information such as a list of names of the passengers and their corresponding seat information. The passenger manifest may also include but is not necessarily limited to a mobile station number or phone number or other contact information associated with each mobile station 104 or communications device of each passenger or at least those passengers which have previously provided such information. The passenger manifest may be transmitted from another server or system or requested by the passenger communications system 102 and transmitted from another server or system of an airlines or other commercial carrier.

In block 110, a passenger name, seat identification or number, and unique personal or passenger identification number (PIN) for registering the mobile station may be generated using the passenger manifest. The PIN may be used to register the mobile station in the event the near field communications (NFC) registration process is not used or cannot be used for some reason. For example, the mobile station may not be equipped with an NFC feature or capability. The PIN may include at least a portion of a name of the passenger and seat information of the passenger, such as a seat number. The seat number may correspond to a seat location in the vehicle or aircraft. The PIN or seat number or location may determine or correspond to a predetermined class or group of services that are available or may be accessed by the passenger. For example, first class passengers may be provided higher priority or a different set of services compared to passengers in other seating locations. Similarly, special passengers or dignitaries with special PINs or seat locations may have a higher priority and services compared to other passengers. The passenger name and seat database may include a passenger name and corresponding seat information, such as seat identification (ID), seat number or seat location of the passenger. The passenger name and seat database may also include mobile station phone numbers for each passenger. The passenger and seat database may include a list of all registered users or passengers including the passenger's name, mobile station number, seat location, seating class or class or level of service as well as any other information that may be helpful to provide services to the user or passenger.

In block 112, a message may be transmitted from the mobile station 104 to register with the passenger communications system 102. The message may be transmitted wirelessly from the mobile station 104 to the passenger communications system 102. In another embodiment or under some circumstances, the mobile station 104 may be manually registered with the passenger communications system 102 using a control panel or other interface. For example, the control panel or interface may be a mobile communications device or computer that may be used by a crew member to manually register a passenger's mobile station with the passenger or vehicle communications system 102. The mobile station 104 may be the device of any passenger or crew member. As described in more detail below, the mobile station 104 may also be the device of a special passenger or crew member, such as an air marshal or other dignitary or very important person (VIP) that may require priority communications or services or other special treatment.

In accordance with another embodiment, the mobile station 104 may be registered for operation on the passenger communications system using near field communications (NFC). For example, if the mobile station 104 includes NFC capabilities, the mobile station 104 may transmit the message to an NFC terminal of the communications system 102. The message may include information for registering the mobile station 104 with the passenger communications system 102 for operation of the mobile station 104 on the passenger communications system 102. The passenger communication system 102 may include a plurality of NFC terminals. An NFC terminal may be associated with each passenger seat. For example, each passenger seat may be equipped with an NFC terminal as described in more detail herein. In another embodiment, the NFC terminals may be distributed at predetermined locations in the vehicle. For example, at least one NFC terminal may be associated with different groups of passenger seats in different portions of the vehicle. A class of service may be based on the location of the NFC terminal and which different portion of the vehicle a particular passenger seat is located.

In block 114, the message to register the mobile station 104 with the system 102 may be received by the passenger or vehicle communications system 102. The passenger communication system 102 may also receive or identify the phone number of the mobile station 104 using standard mobile registration methods. The message may be received by one of a base transceiver station or an NFC terminal of the passenger communications system 102.

If the message is sent to by the mobile station 104 to the NFC terminal and registration of the mobile station 104 is via the NFC terminal using an NFC secure data protocol transfer, the method 100 may advance to block 156 in Figure 1C. Registration via an NFC terminal will be described in more detail below with reference to Figure 1C.

If the mobile station 104 of the passenger is not NFC equipped, or if the passenger has an NFC capable mobile station but for some reason does not register using the NFC terminal and sends a message to the base transceiver station of the passenger communications system 102 requesting to register the mobile station 102, the method 100 may advance to block 116. The passenger may not use the NFC terminal for registration because the passenger is not informed of this capability or for some other reason.

In block 116, a request may be transmitted by the passenger communications system 102 to the mobile station 104 for a unique registration personal or passenger identification number (PIN). The request for the PIN may also include a request to use NFC registration or a separate request may be transmitted to the mobile station 104 for the passenger to register using an NFC terminal and NFC registration process. The NFC registration process may be performed by NFC based data transfer of the mobile station registration information if the passenger's mobile station or device includes an NFC feature or capability. If registration cannot be accomplished using the NFC registration process described herein, then registration with the passenger communications system 102 may be accomplished using a PIN as also described herein.

In block 118, the request for the unique registration PIN or to register using NFC data transfer may be received by the mobile station 104. In block 119, a determination may be made if the mobile station of the passenger includes the NFC feature. If the passenger's mobile station is NFC equipped and if the passenger selects this option for registration, the method 100 may advance to block 156 in Figure 1C. Mobile station registration using the NFC feature or capability will be discussed below with reference to Figure 1C.

If the mobile station is not equipped with the NFC feature and/or the passenger does not select registration via the NFC process, the method 100 may advance to block 120. In block 120, the user or passenger may enter the PIN into the mobile station 104 and the mobile station 104 may transmit the PIN to the vehicle passenger communications system 102. The PIN may be at least a portion of the passenger's name and the passenger's seat number. The passenger may be advised of the correct format and content of his PIN by instructions printed on a placard placed in a seat back in the aircraft or by some other mechanism, such as an inflight magazine, crew member announcement, etc. The PIN including at least a portion of the passenger's name and seat number may not be secure, is not encrypted and is not encoded when transmitted to the passenger communications system 102.

In block 122, the vehicle passenger communications system 102 may receive the unique registration PIN transmitted from the passenger's mobile station 104 by other than the NFC feature or NFC module. In block 124, the vehicle passenger communications system 102 may validate the PIN. The PIN may be validated by comparing information corresponding to the PIN to information in the passenger and seat database or by comparing the PIN to an expected PIN preformed in block 110. As described herein, a PIN validation module may compare the PIN submitted by the passenger to the expected PIN preformed in block 110 and stored in the passenger database. In block 126, if the PIN is validated, a validated PIN message for the passenger may be transmitted to the services module 106.

In block 128, the validated PIN for the passenger may be received by the services module 106. In block 130, a class or level of service for the passenger may be determined based on the PIN which as previously discussed may also correspond to or identify a seat location in the vehicle. If the passenger registered the mobile station 104 using the NFC process, the class or level of service may be determined based on the NFC registration. For example, the class or level of service may be determined by the location of the NFC terminal in the aircraft or other vehicle. As previously discussed, an NFC terminal may be located with each passenger's seat or an NFC terminal may be located in association with a group of seats, such as first class, business class, coach, etc. The passenger's services and communications may be prioritized based on the class or level of service.

Under some circumstances or depending upon what class or level of services a passenger may be provided, there may be a limit to the number of mobile stations that the passenger may register with the vehicle communication system 102 simultaneously. In block 132, a determination may be made if a registered mobile station limit for the passenger, based on the class of service, will be exceeded by registering the current mobile station in the registration request or NFC registration request from the passenger.

In block 134 (Figure 1B), the class or level of service and authorization to register the mobile station may be transmitted to the vehicle communication system 102 in response to the registered mobile station limit not being exceeded. If the registered mobile station limit would be exceeded, a denial of authorization to register the mobile station may be transmitted to the passenger communications system 102 which would be further communicated to the mobile station 104 as described below.

In block 136, the class or level of service and authorization to register the mobile station or denial of registration may be received by vehicle passenger communications system 102. In block 138, the mobile station 104 may be registered with the vehicle passenger communications system 102 in response to a valid PIN or successful NFC registration and the number of registered mobile stations not exceeding the limit for the passenger's class of service. Once the mobile station 104 has been registered, the mobile station number can be associated with the seat location and any other information, such as class of service, etc. in the passenger database or other location.

In block 140, a registration acceptance or logon confirmation or similar message may be transmitted to the mobile station 104 in response to the mobile station 104 being registered with the passenger communications system 102.

In block 142, a registration acceptance or logon confirmation message may be received by the mobile station 104 and presented to the passenger or user by the mobile station 104. If registration was not successful, a denial or error message may be transmitted to the mobile station 104. The denial or error message may indicate a reason for the registration failure, such as for example an invalid PIN, the registered mobile station limit would be exceeded or some other reason.

In block 144, access to the services module 106, communications functions or features of the passenger communications system 102 and any other services based on the class of service provided to the passenger may be authorized or enabled. A message may be transmitted to the mobile station 104 to enable access to the services. The same message or another message may be transmitted to the mobile station 104 for presentation to the passenger on the mobile station to advise the passenger that the services and features are available or have been enabled.

In block 146, the message or messages to enable the mobile station 104 for access to the services module 106 and other features of the passenger communications system 102 and to provide the class or level of service based on the passenger's PIN or NFC registration may be received by the mobile station 104.

In block 148, an interface that may include a menu or list of services and other features available to the passenger based on the passenger's PIN and class of service may be presented to the passenger on the mobile station 104. For example, the menu or list of services may include food and beverage selections, entertainment selections, comfort needs and similar amenities. The interface may also include features to allow the passenger to configure the services or other features provided by the communications system 102 or the services module 106.

In block 150, a services request may be entered by the passenger into his mobile station 104 and transmitted to the passenger communications system 102. Registering with the passenger communications system 102 may enable text messaging onboard the vehicle or aircraft. Accordingly, the services request may be made using text messaging or any other mode of communications that may be enabled or supported by the passenger communications system 102.

In block 152, the services request may be received by the passenger communications system 102. Depending upon the nature of the request, the service may be processed by the passenger communications system 102 or forwarded to the services module 106 to satisfy the request.

In block 154, the services request may be received by the services module 106. As previously discussed, the class or level of service may be provided based on the PIN or NFC registration process. The services module 106 may include an interface to notify the cabin service crew depending upon the service requested, such as a request for food, beverages or other passenger needs. The crew may also respond back to the passenger using the interface. The interface may be a graphical user interface (GUI) presented on a computer or other communications device that may be mobile.

As previously discussed, if registration of the device in either block 112 or block 118 is via the NFC feature of the mobile station 104 and NFC terminal associated with the passenger communications system 102, the method 100 may advance to block 156. In block 156, an NFC feature or module of the mobile station 104 may transmit a message to an NFC terminal of the passenger communications system 102. The NFC feature of the mobile station 104 may include an NFC transceiver. The message received by the NFC terminal may include information about the mobile station 104 for registering the mobile station 104 with the passenger communications system 102. For example, the registration information may include the phone number for the mobile station for comparison with data in a passenger seat and mobile station database and/or any other information that may be appropriate for registering the mobile station 104 with the passenger communications system 102. If there is an NFC terminal uniquely associated with a particular seat, for example, an NFC terminal is located at every seat, the information about the mobile station 104 for registering the mobile station 104 may include information other than a personal or passenger identification number (PIN) or a security code for authorizing use of the passenger communications system 102. If an NFC terminal is not uniquely associated with a particular passenger seat, for example, an NFC terminal may be associated with a group of passenger seats, the registration information in the message may include a unique PIN based on at least a portion of the passenger's name and seat information. If the NFC terminal is associated with a group of seats or section of the aircraft or vehicle, such as first class, business class, coach, etc., a PIN or security code may be used but is not necessarily required.

In block 158, the message including the mobile station information for registering the mobile station 104 may be received by the passenger communications system 102. As previously discussed, only mobile station information for registering the mobile station 104 may be included in the message if the system 102 includes a plurality of NFC terminals and an NFC terminal is associated or located at every passenger seat. If an NFC terminal is not associated or located with every seat, a unique pin and mobile station information may be received by the passenger communications system 102 for registering the mobile station 104.

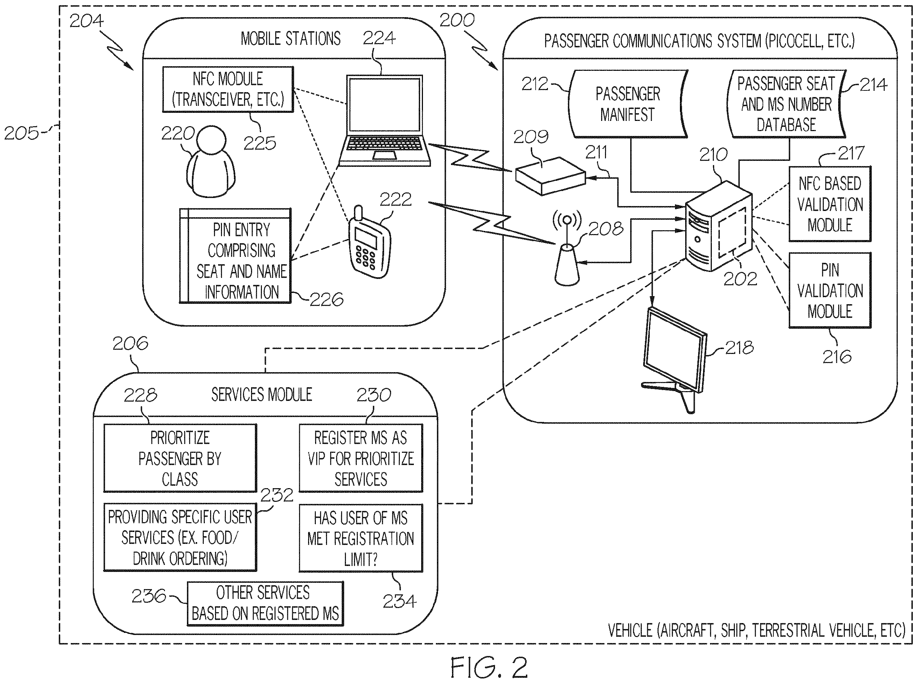

In block 160, a determination may be made if the message for registering the mobile station 104 includes the unique PIN. If the unique PIN is received, the method 100 may advance to block 162. In block 162, the PIN may be validated by at least one of an NFC validation module or a PIN validation module as described herein with reference to Figure 2. In block 164, a validated or invalidated PIN message may be transmitted to the services module 106. The method 100 may then advance to block 128 (Figure 1A) and the method 100 may proceed similar to that previously discussed.

In block 160, if the message received does not include a unique PIN, the method 100 may advance to block 166. In block 166, the message may be validated by an NFC-based validation module similar to that described herein. The method may then advance to block 130 (Figure 1A) and the method 100 may proceed similar to that previously discussed.

Figure 2 is a block schematic diagram of an example of a passenger communications system 200 including a system 202 or module for registering passenger mobile stations 204 with the passenger communications system 200 in accordance with an embodiment of the present disclosure. The functions or operations of the method 100 associated with the passenger communications system 102 in Figures 1A-1C may be embodied in and performed by the passenger communications system 200. The functions or operations of the method 100 associated with the mobile station 104 in Figures 1A-1C may be embodied in and performed by each of the mobile stations 204, and the functions or operations of the method 100 associated with the services module 106 may be embodied in and performed by a services module 206 in Figure 2.

Similar to that previously described, the vehicle communication system 200 may be or may include a picocell or small cellular system for radio frequency communications within a vehicle 205, such as an aircraft or other vehicle. The passenger communications system 200 may include a base transceiver station 208 to transmit and receive radio frequency signals to and from mobile stations 204. The base transceiver station 208 may be similar to base transceiver stations in other picocells or small cellular systems currently in use.

Similar to that previously described, the vehicle passenger communications system 200 may also include an NFC terminal 209 or a plurality of NFC terminals. One NFC terminal 209 may be associated with each passenger seat. The NFC terminal 209 may be located for contacting or touching the mobile station 204 to a designated feature at the passenger's seat in order to initialize an NFC transmission which is short range communications technology. The NFC communications range may be about 0.2 meters. Accordingly, the designated feature at the passenger seat is associated with a respective NFC terminal 209. In addition to actually contacting or touching the mobile station 204 to the designated feature associated with the NFC terminal 209, the mobile station 204 may be brought within a near or short proximity to the designated feature or NFC terminal 209, for example within a communications range of the NFC terminal which may be, for example, about 0.2 meters or less from the NFC terminal 209 to initialize NFC communications.

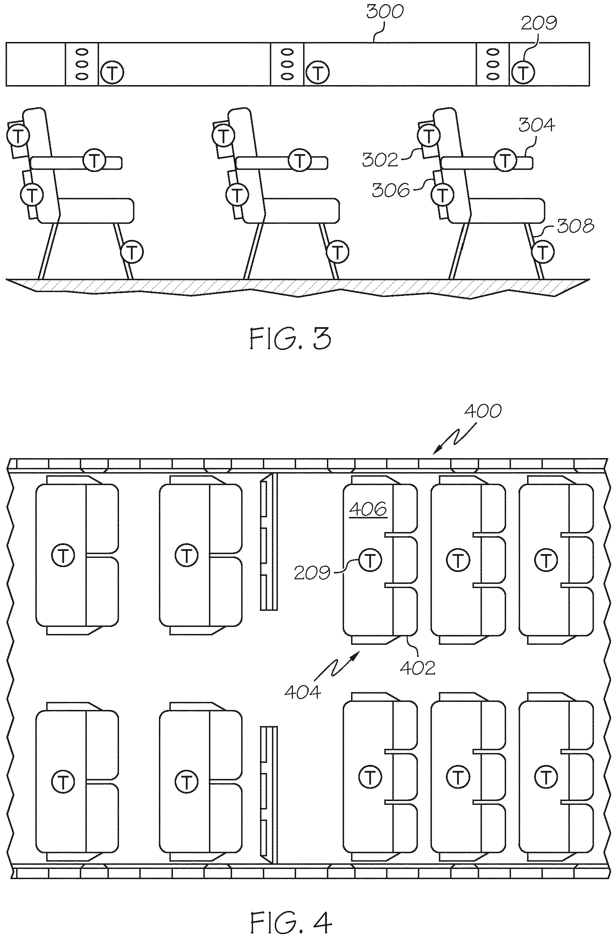

Referring also to Figure 3, Figure 3 is an example of different locations where the designated feature and/or the NFC terminal may be located in association with each passenger's seat in accordance with an embodiment of the present disclosure. For example, the NFC terminal 209 may be located in an overhead module 300 at the passenger's seat location. Additional examples of possible locations of the NFC terminal 209 or designated feature may be integrated into the passenger entertainment module 302 or system at the seat location, or some other location proximate the passenger's seat location, such as an arm rest 304, seat back 306, under the seat 308 or other location proximate the passenger's seat. The designated feature may be an "X Marks the Spot" or other identifying feature with associated instructions to the passenger to contact, touch or bring the passenger's mobile station within a predetermined distance or range of the designated feature to transfer data or transmit the message to the NFC terminal 209 for registering the passenger's mobile station 204 with the passenger communications system 200. In this manner, NFC communications may be initialized responsive to one of: the mobile station 204 touching the designated feature, the mobile station 204 touching the NFC terminal, the mobile station 204 being brought in near proximity to the designated feature, or the mobile station 204 being brought in near proximity to the NFC terminal. For example, the message or registration data may be transmitted to and received by the NFC terminal 209 in response to the mobile station 204 contacting or touching the designated feature or the NFC terminal itself. If an NFC terminal 209 is associated with every seat location, passenger name and seat location information may not need to be received by the passenger communications system 200 for registration of the mobile station 204 as long as the mobile station information for registration is received. The location of the NFC terminal 209 may be used to identify the passenger name and seat location. The passenger name and seat location, for example, may be determined by comparing the known location of the NFC terminal 209 to the passenger manifest information.

In accordance with another embodiment, an NFC terminal 209 may not be located at each passenger seat. Figure 4 is an example of a layout 400 of NFC terminals where an NFC terminal 209 is not associated with each seat 402 but may be associated with a group of seats, such as for example one NFC terminal 209 for each row of seats 404. The NFC terminal 209 may be located in an overhead console 406 for a row of seats 404, for example. If a separate NFC terminal 209 is not associated with each passenger seat 402 or located at each passenger seat 402, the message received by the NFC terminal 209 from an NFC module 225 or feature in the mobile station 204 may include at least a portion of a name of the passenger and seat information of the passenger which was entered into the mobile station 204 by the passenger and mobile station number.

Referring back to Figure 2, the vehicle passenger communication system 200 may also include a server 210 or picocell server to store and run computer readable program code to perform the functions and operations similar to those described in association with passenger communications system 102 in Figures 1A-1C. A communications link 211 is provided between each of the NFC terminals 209 and the server 210 or processor. The system 202 or module for registering passenger mobile stations 204 with the passenger communications system 200 may be embodied in the server 210 or in a separate device. Accordingly, the server 210 may generate and validate PINs. The server 210 may also receive passenger manifest information 212 from a source, such as an airline server at a ground facility or other location off the vehicle 205. The server 210 may process the passenger manifest information 212 and may create and maintain a passenger name and seat ID or location database 214 (passenger and seat database). The passenger and seat database 214 may also include a corresponding phone number for the mobile station or stations 204 of the passenger. The passenger and seat database 214 may be stored on the server 210 or may be stored on a separate storage device.

The server 210 may also include a PIN validation module 216 to validate PINs transmitted to the vehicle communication system 200 or base transceiver station 208 by the mobile station 204 to request registration with the vehicle communication system 200 for access to the services provided by the system 200 and services module 206. As previously described, the PIN may include at least a portion of a name of the passenger and seat information of the passenger, such as a seat ID or seat location in the vehicle 205. The PIN may also include other information. The PIN validation module 216 may validate that the mobile station 204 should have access to register with the vehicle communication system 200 by comparing the PIN sent from the mobile station 204 with information in the passenger and seat database 214. Information for submitting the PIN may be printed on a placard in a seat back of the vehicle 205 or any other location easily accessible by the passenger. The PIN corresponding to the seat location may then determine the class or level of services to be provided to the passenger. Once registered, the PIN validation module 216 may transmit the registration data to the passenger and seat database 214. The passenger and seat database 214 would include a list of all registered users or passengers including the passenger's name, mobile station number, seat location, seating class or class or level of service as well as any other information that may be helpful to provide services to the user or passenger.

The passenger communications system 200 may additionally include an NFC validation module 217 for registering mobile stations 204 with an NFC feature or capability. The NFC based validation module may validate the user input data, such as passenger name and seat number and establish the ability of the passenger communications system 200 to register the mobile station 204. If NFC registration is used by the mobile station 204, the NFC validation module 217 may compare passenger data to passenger manifest data 212. The NFC validation module 217 may compare passenger and seat information to information in the passenger seat and mobile station database 214. If NFC terminals 209 are distributed to known predetermined locations in the vehicle, such as every passenger seat, passenger seat information may not need to be entered by the passenger into the mobile station 204 and transmitted to the passenger communications system for registration. In this embodiment, the locations of the NFC terminals can be used for the registration process. Accordingly, a mobile station 204 may be registered using secure data protocol transfers without the need for entering a PIN or other security code.

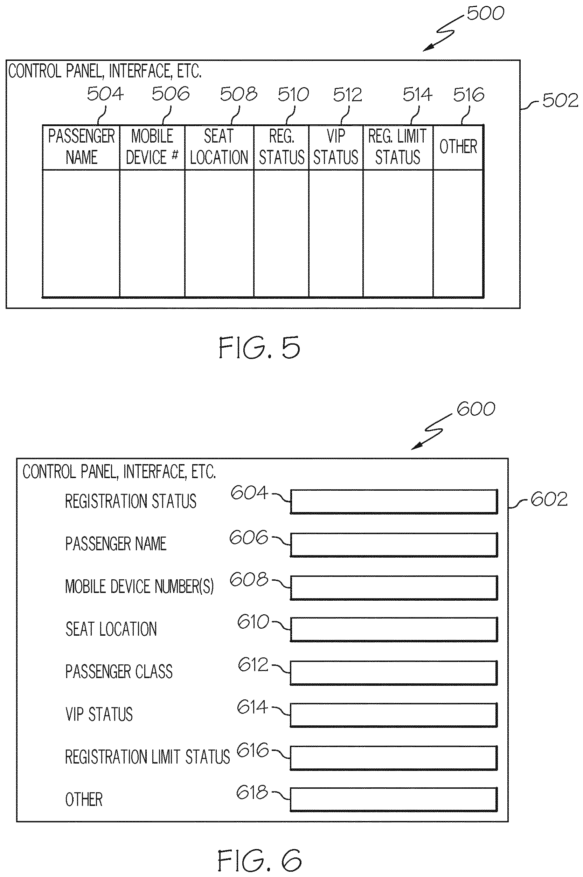

The passenger communications system 200 may also include an interface or control panel 218 to control operation of the vehicle communication system 200. The interface or control panel 218 may be used to report on the registration information of registered users or passengers and may also provide an interface for manually registering a passenger, dignitary or VIP or the mobile station of a crew member to provide prioritization or special services. The interface or control panel 218 may also be part of a mobile or portable device so that a crew member may carry it through an aircraft cabin for manual registration of mobile stations 204 or for other purposes. The interface or control panel 218 may also report service requests from mobile stations 204. An example of registration information that may be presented on the interface or control panel is illustrated in Figures 5 and 6 as described below.

Examples of mobile stations 204 may include a cellular phone or smart phone 222, lap top computer 224 or similar communications devices. The passenger may enter the PIN 226 comprising at least a portion of the passenger's name and seat information into the mobile station 222 or 224 which may transmit the PIN wirelessly to the base transceiver station 208.

The mobile station 204 may include an NFC feature or module 225 for registering the mobile device with the passenger communications system using the NFC process as described herein. The NFC feature or module 225 may include an NFC transceiver for transmitting and receiving information or data from an NFC terminal 209. An example of a mobile station 204 with an NFC feature or module 225 is a Samsung® Nexus S Android phone. Samsung is a trademark of Samsung Electronics Co., Ltd. in the United States, other countries or both. Nexus S is a trademark of Google, Inc. in the Unites States, other countries or both.

The services module 206 may also be embodied in and performed by the server 210. Examples of the features or services that the service module 206 may provide may include but is not necessarily limited to prioritization of passengers by class 228; registering a mobile station 204 as a VIP or dignitary for prioritized or higher-level services 230; providing specific user services or notifying a crew member to provide specific passenger services, such as food or drink ordering, entertainment requests, or other passenger requests 232; determining if a user or passenger has met a registration limit of the number of mobile stations the passenger may register based on the passenger's class of service 234; and other services 236 based on the registered mobile station's class of service. The services module 206 may also permit the purchase of services and products by the passenger using the passenger's mobile station 204 equipped with the NFC module 225. For example, Google Wallet embodied on the mobile station 204 may be used to make purchases. Google® and Google Wallet are trademarks of Google, Inc. in the United States, other countries or both.

As previously discussed, a class of service may be determined based on registering the mobile station 204. In an embodiment, at least one NFC terminal may be provided in each different seating portion or section of the vehicle based on the class of service in each different seating section. Accordingly, the class of service may be determined based on a location of the NFC terminal used to register the mobile station 204 and which portion of the vehicle is associated with the NFC terminal used. For example, an NFC terminal located in a first class section of the vehicle used to register the mobile station 204 would provide a higher level of service than an NFC terminal located in a coach section of the vehicle or aircraft.

In the context of the vehicle 205 being an aircraft, the operations and features of the passenger communications system 200 may include enhanced security implementations by using passenger manifest information for registration and PIN generation. The PIN validation module 216 may require the PIN before registering the mobile station 204 with the passenger communications system 200 or aircraft picocell network. The server 210 or aircraft picocell server may command the base transceiver station 208 to transmit a PIN request to the mobile station 204. The PIN request may be displayed to the user or passenger on his mobile station 204. As previously discussed, the PIN may be created using at least a portion of the user's or passenger's name and seat location by the PIN validation module 216. The passenger may be advised of the correct PIN format and content by a card in the seat back or by some other arrangement. The passenger may enter the PIN into his mobile station 204 which may transmit the PIN to the base transceiver station 208. The base transceiver station 208 transfers the PIN to the server 210. The PIN validation module 216 may compare the PIN received from the passenger to the correct PIN generated by the PIN validation module 216 and stored in the passenger seat location and mobile station number database 214. The mobile station 204 may be granted access to the passenger communications system 200 or aircraft picocell in response to the PIN being validated. This can prevent unauthorized access to the aircraft picocell network by disabling any automatic aircraft picocell network registering.

The aircraft passenger manifest 212, which contains a list of the flight passengers and their corresponding seat locations and is electronically stored on the aircraft systems, may be copied to the server 210 or aircraft picocell server. The passenger manifest 212 may also include information associated with each mobile station of the passenger, such as phone numbers, electronic serials numbers or other information that may be needed or usable by the passenger communications system 210 and services module 206 to provide the services described herein. Rather than just using a random number, a PIN number which is unique per passenger and seat location may be generated by the PIN validation module 216 as previously described. The PIN including a passenger name and corresponding seat location may ensure that the passenger has a valid seat location and the PIN may then be used to authorize other services based on a class of service corresponding to the seat location.

Once the user or passenger registers with the passenger communications system 200 or aircraft picocell, the server 210 or aircraft picocell server now can associate a mobile station number to a seat location. This can be used in multiple services and functions as previously described.

Figure 5 is an example of a screen or graphical user interface (GUI) 500 presentable on a control panel 502 or interface providing registration information for each passenger in accordance with an embodiment of the present disclosure. The GUI 500 may include a list of passenger registration information. The list of passenger registration information may be in a tabular format or other format. For example, the passenger registration information may include fields or columns for passenger names 504, mobile device numbers 506, seat location 508, registration status 510, VIP status 512, registration limit status 514 or current number of registered devices and the passenger's limit, and any other information 516 that may be of interest or helpful in providing services.

Figure 6 is an example of another screen or GUI 600 that may be presented on a control panel 602 or interface to manually register a mobile station with a passenger communications system in accordance with an embodiment of the present disclosure. The GUI may include fields for entering a registration status 604, a passenger name 606, a mobile device number or numbers 608, a seat location 610, a passenger class 612, a VIP status 614, a registration limit status 616 and any other information 618 that may be of interest or use.

The system and method enables prioritization of system functions for certain passengers (VIPs, crew or air marshals). This can provide an easier means for air marshals to discretely have priority access to the communications system and its functions. The system may also be implemented to provide airline frequent flyers access to services over other passengers. The system and method also allows segregation of passenger services based on the aircraft seat class. Using the name and seat information the system can selectively provide services to passengers based on their location in the aircraft. Possible implementations of this may be that first class passengers can get priority services over other passengers and to allow certain services in first class, such as for example allowing incoming phone calls at night which could be disabled for other aircraft classes.

The system also implements a method to identify the mobile station user without transmitting data off the aircraft. Current implementations of aircraft picocell systems will transmit data off the aircraft to terrestrial ground networks to determine what the name of a person is based on the mobile station number. By using the name and seat location, the system would not need to do the typical data transmission. This would prevent the expense of data transfer charges by having the identity stored locally on the aircraft picocell server.

Text messaging or similar data transfers for passenger services such as food and drink ordering may also be used. This would be an additional service or function that could result from knowing the passenger's seat location and name information. Passengers may use their mobile stations which are registered with the aircraft picocell system to access any number of passenger's services. Because the picocell system knows the seat location of every registered mobile station, text messages or data transfers could be used by aircraft crew to provide services. The aircraft picocell server may track purchases or to provide other functions which may be customized to a specific passenger. For example, the user may send a text message to a predetermined aircraft crew mobile station number with a food order and the crew member could then provide the food to the seat location provided by the aircraft picocell server.

The flowcharts and block diagrams in the Figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems which perform the specified functions or acts, or combinations of special purpose hardware and computer instructions.

The terminology used herein is for the purpose of describing particular embodiments only and is not intended to be limiting of embodiments of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description, but is not intended to be exhaustive or limited to embodiments of the disclosure in the form disclosed. Many modifications and variations will be apparent to those of ordinary skill in the art without departing from the scope of the disclosure. The embodiment was chosen and described in order to best explain the principles of embodiments of the disclosure and the practical application, and to enable others of ordinary skill in the art to understand embodiments of the disclosure for various embodiments with various modifications as are suited to the particular use contemplated.

Although specific embodiments have been illustrated and described herein, those of ordinary skill in the art appreciate that any arrangement which is calculated to achieve the same purpose may be substituted for the specific embodiments shown and that embodiments of the disclosure have other applications in other environments. This application is intended to cover any adaptations or variations of the present disclosure.

## Claims

1. A method for registering a mobile station (204) of a passenger with a passenger communication system (200) of a vehicle (205), **characterised by**:
receiving a message from a near field communications, NFC, module of the mobile station by an NFC terminal (209) of the passenger communications system (200), the message comprising information for registering the mobile station (204) with the passenger communications system (200);
registering the mobile station (204) with the passenger communications system (200) based on the message; and
enabling access to the passenger communications system (200) for the mobile station (204).

2. The method of claim 1, wherein receiving the message by the NFC terminal comprises receiving information about the mobile station (204) for registering the mobile station (204) with the passenger communications system (200) and wherein the NFC terminal is uniquely associated with a particular passenger seat.

3. The method of claim 2, wherein the NFC terminal (209) is located for initializing an NFC transmission with the mobile station (204) in response to the mobile station (204) contacting or being located within a predetermined proximity to the NFC terminal (209) or a designated feature at the passenger's seat.

4. The method of claim 2, further comprising validating the message by an NFC based validation module (217) on a server (210) of the passenger communications system (200).

5. The method of claim 1, wherein receiving the message by the NFC terminal (209) comprises receiving at least a portion of a name of the passenger and seat information of the passenger for registering the mobile station (204) with the passenger communication system (200) and wherein the NFC terminal (209) is associated with a plurality of passenger seats.

6. The method of claim 1, further comprising providing a plurality of NFC terminals (209), the NFC terminals (209) being distributed in known locations about the vehicle (205), an NFC terminal location (209) being determined and used during mobile station registration.

7. A passenger communications system (200) on board a vehicle (205), **characterised by**:
at least one near field communications, NFC, terminal (209) for receiving a message from an NFC module of a mobile station (204) of a passenger, the message comprising information for registering the mobile station (204) with the passenger communications system (200);
a processor;
a communications link (211) between the at least one NFC terminal (209) and the processor; and
a module (20) operating on the processor for registering the mobile station (204) with the passenger communications system (200) based on the message;
wherein the passenger communication system (200) is configured to enable access to the passenger communications system (200) for the mobile station (204) following registration of the mobile station (204) with the passenger communications system (200).

8. The passenger communications system of claim 7, further comprising a plurality of NFC terminals (209), each NFC terminal (209) being uniquely associated with a particular passenger seat and the message received by the NFC terminal (209) comprising information about the mobile station (204) for registering the mobile station with the passenger communications system (200).

9. The passenger communications system of claim 8, wherein each respective NFC terminal (209) is located for initializing an NFC transmission with a mobile station (204) in response to contacting the mobile station (204) of each passenger to a designated feature at the passenger's seat or the mobile station (204) being located within a predetermined proximity of the respective NFC terminal (209) or designated feature.

10. The passenger communications system of claim 8, further comprising an NFC based validation module (217) on a server of the passenger communications system (200) for validating the message.

11. The passenger communications system of claim 7, wherein the vehicle (205) is an aircraft, the system further comprising a plurality of NFC terminals (209), one NFC terminal (209) being located at each passenger seat.

12. The passenger communications system of claim 7, further comprising a plurality of NFC terminals (209), each NFC terminal (209) being associated with a plurality of passenger seats and the message received by the NFC terminal (209) comprising at least a portion of a name of the passenger and seat information of the passenger for registering the mobile station (204) with the passenger communications system (200).

13. A computer program product for registering a mobile station (204) of a passenger with a passenger communication system (200) of a vehicle (205), the computer program product **characterised by**:
a computer readable storage medium having computer readable program code embodied therewith, the computer readable program code comprising:
computer readable program code which when executed by a processor, configures the processor to:
receive a message from a near field communications, NFC, module of the mobile station (204) by an NFC terminal (209) of the passenger communications system (200), the message comprising information for registering the mobile station (204) with the passenger communications system (200);
register the mobile station (204) with the passenger communications system (200) based on the message; and
enable access to the passenger communications system (200) for the mobile station (204) following registration of the mobile station (204) with the passenger communications system (200).

## Patentansprüche

1. Verfahren zum Registrieren einer Mobilstation (204) eines Fahrgasts in einem Fahrgastkommunikationssystem (200) eines Fahrzeugs (205), **gekennzeichnet durch**:
Empfangen eine Nachricht von einem Nahfeldkommunikationsmodul, NFC-Modul, der Mobilstation durch ein NFC-Endgerät (209) des Fahrgastkommunikationssystems (2), wobei die Nachricht Informationen zum Registrieren der Mobilstation (204) mit dem Fahrgastkommunikationssystem (200) enthält;
Registrieren der Mobilstation (204) mit dem Fahrgastkommunikationssystem (200) anhand der Nachricht; und
Freigeben eines Zugriffs auf das Fahrgastkommunikationssystem (200) für die Mobilstation (204).

2. Verfahren nach Anspruch 1, wobei das Empfangen der Nachricht durch das NFC-Endgerät das Empfangen von Informationen über die Mobilstation (204) zum Registrieren der Mobilstation (204) mit dem Fahrgastkommunikationssystem (200) umfasst und wobei das NFC-Endgerät einem bestimmten Fahrgastsitz eindeutig zugeordnet ist.

3. Verfahren nach Anspruch 2, wobei das NFC-Endgerät (209) so angeordnet ist, dass es eine NFC-Übertragung mit der Mobilstation (204) in Reaktion darauf initialisieren kann, dass die Mobilstation mit dem NFC-Endgerät (209) oder mit einem bestimmten Merkmal am Fahrgastsitz einen Kontakt herstellt oder sich in einer vorgegebenen Nähe hierzu befindet.

4. Verfahrensanspruch 2, das ferner das Validieren der Nachricht durch ein NFC-basiertes Validierungsmodul (217) in einem Server (210) des Fahrgastkommunikationssystems (200) umfasst.

5. Verfahren nach Anspruch 1, wobei das Empfangen der Nachricht durch das NFC-Endgerät (209) das Empfangen wenigstens eines Teils eines Namens des Fahrgasts und von Sitzinformationen des Fahrgasts umfasst, um die Mobilstation (204) mit dem Fahrgastkommunikationssystem (200) zu registrieren, und wobei das NFC-Endgerät (209) mehreren Fahrzeugsitzen zugeordnet ist.

6. Verfahren nach Anspruch 1, das ferner das Bereitstellen mehrerer NFC-Endgeräte (209) umfasst, wobei die NFC-Endgeräte (209) auf bekannte Orte im Fahrzeug (205) verteilt sind, wobei der Ort eines NFC-Endgeräts während der Registrierung einer Mobilstation bestimmt und verwendet wird.

7. Fahrzeugkommunikationssystem (200) an Bord eines Fahrzeugs (205), **gekennzeichnet durch**:
wenigstens ein Nahfeldkommunikationsendgerät, NFC-Endgerät, (209) zum Empfangen einer Nachricht von einem NFC-Modul einer Mobilstation (204) eines Fahrgasts, wobei die Nachricht Informationen zum Registrieren der Mobilstation (204) mit dem Fahrgastkommunikationssystem (200) umfasst;
einen Prozessor;
eine Kommunikationsstrecke (211) zwischen dem wenigstens einen NFC-Endgerät (209) und dem Prozessor; und
ein Modul (20), das in dem Prozessor arbeitet, um die Mobilstation (204) mit dem Fahrgastkommunikationssystem (200) anhand der Nachricht zu registrieren;
wobei das Fahrgastkommunikationssystem (200) konfiguriert ist, den Zugriff auf das Fahrgastkommunikationssystem (200) für die Mobilstation (204) infolge der Registrierung der Mobilstation (204) mit dem Fahrgastkommunikationssystem (200) freizugeben.

8. Fahrgastkommunikationssystem nach Anspruch 7, das ferner mehrere NFC-Endgeräte (209) umfasst, wobei jedes NFC-Endgerät (209) einem bestimmten Fahrzeugsitz eindeutig zugeordnet ist und die von dem NFC-Endgerät (209) empfangene Nachricht Informationen über die Mobilstation (204) zum Registrieren der Mobilstation mit dem Fahrgastkommunikationssystem (200) enthält.

9. Fahrgastkommunikationssystem nach Anspruch 8, wobei jedes entsprechende NFC-Endgerät (209) so angeordnet ist, dass es eine NFC-Übertragung mit einer Mobilstation (204) in Reaktion darauf initialisiert, dass es einen Kontakt zwischen der Mobilstationen (204) jedes Fahrgasts und einem bezeichneten Merkmal am Fahrzeugsitz herstellt oder dass sich die Mobilstation (204) in einer vorgegebenen Nähe zu dem jeweiligen NFC-Endgerät (209) oder dem bezeichneten Merkmal befindet.

10. Fahrgastkommunikationssystem nach Anspruch 8, dass es ferner ein NFC-basiertes Validierungsmodul (217) in einem Server des Fahrgastkommunikationssystems (200) zum Validieren der Nachricht umfasst.

11. Fahrgastkommunikationssystem nach Anspruch 7, wobei das Fahrzeug (205) ein Flugzeug ist und wobei das System ferner mehrere NFC-Endgeräte (209) umfasst, wobei sich an jedem Fahrgastsitz ein NFC-Endgerät (209) befindet.

12. Fahrgastkommunikationssystem nach Anspruch 7, das ferner mehrere NFC-Endgeräte (209) umfasst, wobei jedes NFC-Endgerät (209) mehreren Fahrgastsitzen zugeordnet ist und die von dem NFC-Endgerät (209) empfangene Nachricht wenigstens einen Teil eines Namens des Fahrgasts und Sitzinformationen des Fahrgasts enthält, um die Mobilstation (204) mit dem Fahrgastkommunikationssystem (200) zu registrieren.

13. Computerprogrammprodukt zum Registrieren einer Mobilstation (204) eines Fahrgasts mit einem Fahrgastkommunikationssystem (200) eines Fahrzeugs (205), wobei das Computerprogrammprodukt **gekennzeichnet ist durch**:
ein computerlesbares Speichermedium, in dem computerlesbarer Programmcode verkörpert ist, wobei der computerlesbare Programmcode Folgendes umfasst:
computerlesbaren Programmcode, der dann, wenn er von einem Prozessor ausgeführt wird, den Prozessor konfiguriert zum:
Empfangen einer Nachricht von einem Nahfeldkommunikationsmodul, NFC-Modul, der Mobilstation (204) **durch** ein NFC-Endgerät (209) des Fahrgastkommunikationssystems (200), wobei die Nachricht Informationen zum Registrieren der Mobilstation (204) mit dem Fahrgastkommunikationssystem (200) enthält;
Registrieren der Mobilstation (204) mit dem Fahrgastkommunikationssystem (200) anhand der Nachricht; und
Freigeben eines Zugriffs auf das Fahrgastkommunikationssystem (200) für die Mobilstation (204) infolge der Registrierung der Mobilstation (204) mit dem Fahrgastkommunikationssystem (200).

## Revendications

1. Procédé d'enregistrement d'une station mobile (204) d'un passager auprès d'un système de communication de passagers (200) d'un véhicule (205), **caractérisé par** les étapes ci-dessous consistant à :
recevoir un message provenant d'un module de communication en champ proche, NFC, de la station mobile, par le biais d'un terminal de communication NFC (209) du système de communication de passagers (200), le message comprenant des informations pour enregistrer la station mobile (204) auprès du système de communication de passagers (200) ;
enregistrer la station mobile (204) auprès du système de communication de passagers (200) sur la base du message ; et
permettre l'accès au système de communication de passagers (200) pour la station mobile (204).

2. Procédé selon la revendication 1, dans lequel l'étape de réception du message par le terminal de communication NFC consiste à recevoir des informations concernant la station mobile (204) en vue d'enregistrer la station mobile (204) auprès du système de communication de passagers (200), et dans lequel le terminal de communication NFC est associé de manière unique à un siège de passager spécifique.

3. Procédé selon la revendication 2, dans lequel le terminal de communication NFC (209) est localisé en vue d'initialiser une transmission de communication NFC avec la station mobile (204), en réponse au fait que la station mobile (204) entre en contact ou est située à une proximité prédéterminée du terminal de communication NFC (209) ou d'un élément désigné au niveau du siège du passager.

4. Procédé selon la revendication 2, comprenant en outre l'étape consistant à valider le message par le biais d'un module de validation à base de communication NFC (217) sur un serveur (210) du système de communication de passagers (200).

5. Procédé selon la revendication 1, dans lequel l'étape de réception du message par le terminal de communication NFC (209) consiste à recevoir au moins une partie d'un nom du passager et des informations de siège du passager pour enregistrer la station mobile (204) auprès du système de communication de passagers (200), et dans lequel le terminal de communication NFC (209) est associé à une pluralité de sièges de passagers.

6. Procédé selon la revendication 1, comprenant en outre l'étape consistant à fournir une pluralité de terminaux de communication NFC (209), les terminaux de communication NFC (209) étant répartis dans des emplacements connus autour du véhicule (205), un emplacement de terminal de communication NFC (209) étant déterminé et utilisé au cours de l'enregistrement de station mobile.

7. Système de communication de passagers (200) embarqué dans un véhicule (205), **caractérisé par** :
au moins un terminal de communication en champ proche, NFC, (209) destiné à recevoir un message en provenance d'un module de communication NFC d'une station mobile (204) d'un passager, le message comprenant des informations pour enregistrer la station mobile (204) auprès du système de communications de passagers (200) ;
un processeur ;
une liaison de communication (211) entre ledit au moins un terminal de communication NFC (209) et le processeur ; et
un module (20) fonctionnant sur le processeur pour enregistrer la station mobile (204) auprès du système de communication de passagers (200) sur la base du message ;
dans lequel le système de communication de passagers (200) est configuré de manière à permettre l'accès au système de communication de passagers (200) pour la station mobile (204), subséquemment à l'enregistrement de la station mobile (204) auprès du système de communication de passagers (200).

8. Système de communication de passagers selon la revendication 7, comprenant en outre une pluralité de terminaux de communication NFC (209), chaque terminal de communication NFC (209) étant associé de manière unique à un siège de passager spécifique, et dans lequel le message reçu par le terminal de communication NFC (209) comprend des informations concernant la station mobile (204) pour enregistrer la station mobile auprès du système de communication de passagers (200).

9. Système de communication de passagers selon la revendication 8, dans lequel chaque terminal de communication NFC respectif (209) est localisé pour initialiser une transmission de communication NFC avec une station mobile (204), en réponse au fait que la station mobile (204) de chaque passager entre en contact avec un élément désigné au niveau du siège du passager, ou au fait que la station mobile (204) est située à une proximité prédéterminée du terminal de communication NFC respectif (209) ou de l'élément désigné.

10. Système de communication de passagers selon la revendication 8, comprenant en outre un module de validation à base de communication NFC (217), sur un serveur du système de communication de passagers (200), destiné à valider le message.

11. Système de communication de passagers selon la revendication 7, dans lequel le véhicule (205) est un aéronef, le système comprenant en outre une pluralité de terminaux de communication NFC (209), un terminal de communication NFC (209) étant situé au niveau de chaque siège de passager.

12. Système de communication de passagers selon la revendication 7, comprenant en outre une pluralité de terminaux de communication NFC (209), chaque terminal de communication NFC (209) étant associé à une pluralité de sièges de passagers, et le message reçu par le terminal de communication NFC (209) comprenant au moins une partie d'un nom du passager et des informations de siège du passager pour enregistrer la station mobile (204) auprès du système de communication de passagers (200).

13. Produit-programme informatique destiné à enregistrer une station mobile (204) d'un passager auprès d'un système de communication de passagers (200) d'un véhicule (205), le produit-programme informatique étant **caractérisé par** :
un support de stockage lisible par ordinateur dans lequel est intégré un code de programme lisible par ordinateur, le code de programme lisible par ordinateur comprenant :
un code de programme lisible par ordinateur qui, lorsqu'il est exécuté par un processeur, configure le processeur de manière à :
recevoir un message provenant d'un module de communication en champ proche, NFC, de la station mobile (204), par le biais d'un terminal de communication NFC (209) du système de communication de passagers (200), le message comprenant des informations pour enregistrer la station mobile (204) auprès du système de communication de passagers (200) ;
enregistrer la station mobile (204) auprès du système de communication de passagers (200) sur la base du message ; et
permettre l'accès au système de communication de passagers (200) pour la station mobile (204) suite à l'enregistrement de la station mobile (204) auprès système de communication de passagers (200).
